# EUROPÄISCHE PATENTANMELDUNG

(11) **EP 1 110 779 A2**
(43) Veröffentlichungstag der Anmeldung: **27.06.2001**
(21) Anmeldenummer: 00111591.4
(22) Anmeldetag: 31.05.2000
(51) Int. Cl.: B60J 5/06, B60J 7/06

(54) **Abdeckplane mit Solarzellen für Fahrzeuge**

(30) Priorität: 02.06.1999 DE 19925136; 31.05.1999 DE 19924878; 26.07.1999 DE 19935009
(71) Anmelder: Müller, Hermann-Frank, D-53177 Bonn (DE)
(72) Erfinder: Müller, Hermann-Frank, D-53177 Bonn (DE)

(57) **Zusammenfassung**

Die Erfindung bezieht sich auf eine Zugmaschine mit Sattelauflieger und/oder Anhänger und mit einer auf einer Gestängekonstruktion (3) liegenden Abdeckplane (4) zum Abdecken einer Ladefläche. Die Abdeckplane (4), die auch mehrteilig sein kann, ist mit biegsamen Solarzellenstreifen ausgerüstet, auf zugeordneten Walzen (7) aufrollbar und an der Gestängekonstruktion (3) geführt. Im Hohlraum der Walze (7) ist deren Antriebsmotor und wenigstens ein Energiespeicher (Hochleistungskondensator) zum Speichern der aus den Solarzellenstreifen gewonnenen Energie angeordnet. An der Rückseite vom Führerhaus der Zugmaschine kann bedarfsweise die Klima- und auch eine Kühlanlage installiert werden.

Die erfindungsgemäße Zugmaschine ist insbesondere für den Straßenverkehr vorgesehen; sie kann aber mit selbstverständlichen konstruktiven Änderungen auch im Schienenverkehr eingesetzt werden.

## Beschreibung

Die Erfindung bezieht sich auf eine Zugmaschine als Fahrzeug mit Sattelauflieger und/oder Anhänger und mit einer Plane zum Abdecken der Ladefläche. Derartige Zugmaschinen, insbesondere für den Straßenverkehr, sind in unterschiedlichen Größen und für den Transport unterschiedlicher Güter bekannt, wobei eine Klimaanlage-für das Führerhaus des Fahrzeugs gegebenenfalls durch eine Klima- oder Kühlanlage für das transportierte Gut ergänzt werden muß. Für die für diese Zwecke benötigte Energie sind Energiespeicher (Batterien) erforderlich, die bei langen Fahrtstrecken zwischenzeitlich aufgeladen bzw. gegen aufgeladene ausgetauscht werden müssen, oder es muß ein motorbetriebener Generator mitgeführt werden, der zusätzliche Betriebsmittel verbraucht und den zur Verfügung stehenden Laderaum für das transportierte Gut verringert.

Es ist deshalb Aufgabe der Erfindung, diesen Nachteil zu beheben, so daß vor allem die erforderliche Energiemenge für Klima- und Kühlanlage stets zur Verfügung steht und der vorhandene Laderaum für das transportierte Gut voll ausgenutzt werden kann.

Zur Lösung dieser Aufgabe ist die Plane zum Abdecken der Ladefläche mit biegsamen Solarzellenstreifen ausgerüstet und auf einer Walze aufrollbar angeordnet, die auf einer Gestängekonstruktion oberhalb der Ladefläche drehbar und abnehmbar aufliegt.

Vorteilhafte Einzelheiten in Ausbildung und Zubehör von Zugmaschine und Abdeckplane der Ladefläche sind in den Unteransprüchen angegeben.

Die Erfindung wird nachstehend anhand eines Ausführungsbeispiels be schrieben und dargestellt. Dabei zeigen
- Figur 1: Zugmaschine mit Sattelauflieger,
- Figur 2: Halterung der Abdeckplane.

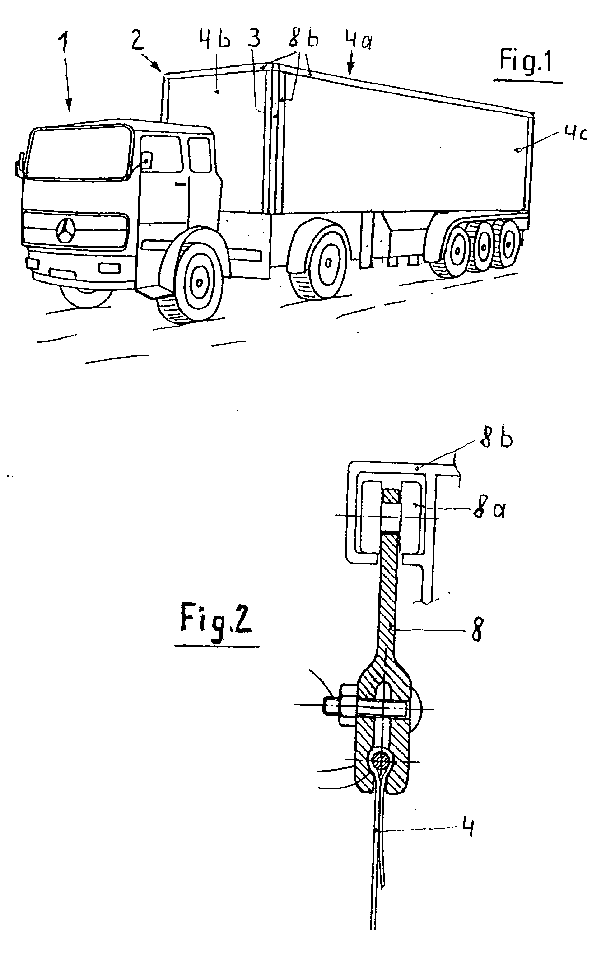

In Figur 1 ist eine Zugmaschine 1 mit Sattelauflieger 2 dargestellt. Auf den Ladefläche des Sattelaufliegers 2 ist eine Gestängekonstruktion 3 angebracht, die von mindestens einer Abdeckplane 4 umhüllt ist. Diese Abdeckplane 4 kann einteilig sein, wenn z.B. nur eine Längsseite oder nur das Dach von ihr abgedeckt werden soll. Sollen jedoch sowohl das Dach als auch beide Längs- und Stirnseiten von Abdeckplanen abgedeckt werden, so ist es zweckmäßig, die Abdeckplane 4 mehrteilig auszubilden, um den Abdeckvorgang zu vereinfachen und zu beschleunigen. So ist es z. B. günstig, eine Abdeckplane 4a für das Dach und die hintere Stirnfläche eine Abdeckplane 4b für die vordere Stirnfläche und je eine Abdeckplane 4c für jede Längsseitenfläche vorzusehen. Letztere können je nach Bedarf senkrecht (siehe Figur 1) oder waagerecht betätigbar angebracht werden.

Um die Flächen der Abdeckplanen 4a, 4b und 4c zur Energiegewinnung auszunutzen, werden auf ihnen biegsame Solarzellenstreifen 5 angebracht. Die in diesen Solarzellen gewonnene Energie wird in bekannter Weise über Kabel, gedruckte Leitungen und dergl. zu wenigstens einem Energiespeicher 6 geleitet, der jeweils im Hohlraum der Walzen 7a, 7b und 7c zum Aufrollen der Abdeckplanenteile 4a, 4b und 4c vorgesehen ist. Als Energiespeicher 6 können z.B. Batterien oder Hochleistungskondensatoren vorgesehen werden. Es ist möglich, die biegsamen Solarzellenstreifen 5 wasserdicht und lösbar miteinander zu verbinden. Eine die Energieaufnahme nicht hindernde wasserabweisende Schutzschicht, die Schmutzteilchen weniger Halt gibt und auch eine Abnutzung durch Reibeffekte zumindest verringert, weisen so insgesamt auf die Alternative, gegebenenfalls die Solarzellenstreifen 5 jeweils zu einem Abdeckplanenteil zusammenzusetzen und damit die übliche Abdeckplane zu ersetzen. Weil die Solarzellenstreifen 5 lösbar miteinander verbunden sind, ist auch ein evtl. Austausch z.B. nach einer Beschädigung ohne weiteres möglich.

Um die Abdeckplanenteile 4a, 4b und 4c leicht auszurollen, werden ihre Ränder in Abrollrichtung z.B. mit Klemmeinrichtungen 8 - siehe Figur 2 - versehen, die jeweils an ihrem freien Ende eine Rolle 8a aufweisen, die in einer an der Gestängekonstruktion 3 angebrachten Führung 8b gleitet. Dabei kann die Führung 8b einerseits Lappen aufweisen, die in Schlitze der Gestängekonstruktion 3 gesteckt werden, und weitere Lappen im rechten Winkel dazu, die mit der Gestängekonstruktion in beliebiger Weise, z.B. lösbar, verbunden werden.

Das Aus- und Wiederzusammenrollen der Abdeckplanenteile 4a, 4b und 4c von der bzw, auf die Walze 7a, 7b und 7c kann manuell z.B. mittels einer Kurbel oder durch einen Motor erfolgen, der ebenfalls im Hohlraum der Walze 7 sein und dessen Betätigung etwa vom Führerhaus 1a der Zugmaschine 1 aus erfolgen kann. In diesem Zusammenhang ist es zweckmäßig, das freie Ende des jeweiligen Abdeckplanenteils 4a, 4b und 4c mit der zugeordneten Walze 7a, 7b und 7c mittels eines Ketten- oder Seilzuges zu verbinden, der über ein am der Walze 7 gegenüber entfernten Ende der Rollenführung 8b vorgesehenes Umlenkelement, z.B. ein Zahnrad oder eine Rolle, geleitet wird. Auf diese Weise wird ein gleichmäßiger Rollvorgang in beiden Richtungen sichergestellt.

Die Walzen 7a, 7b und 7c der einzelnen Abdeckplanenteile 4a, 4b und 4c sind in Halterungen der Gestängekonstruktion 3 in beliebiger bekannter Weise einrastbar und in dieser Stellung verriegelbar, damit einerseits bei Bedarf ein Austausch des gesamten Abdeckplanenteils 4a, 4b oder 4c z.B. bei größeren Beschädigungen vorgenommen, dieses Teil auch getrennt von der Zugmaschine 1 zur Energiegewinnung und -verwendung verwendet werden kann, andererseits aber auch durch eine verschließbare und ggfs. gesicherte Verriegelung ein Entfernen der Walze 7 aus ihrer drehbaren Lagerung etwa durch Erschütterungen während der Fahrt oder durch eine unberechtigte Entnahme verhindert wird. Beim (berechtigten) Entfernen von Walze 7a, 7b oder 7c mit dem zugeordneten Abdeckplanenteil 4a, 4b oder 4c ist zuvor der Ketten- oder Seilzug in üblicher Weise von der Verbindung mit Walze und Abdeckplanenteil zu lösen.

Es besteht für jede Walze 7 die Möglichkeit, ihre Halterungen an einem Schwenkarm anzubringen, der auf der Gestängekonstruktion 3 schwenkbar aufliegt und bei seiner Betätigung - manuell oder z.B. hydraulisch vom Führerhaus 1a aus - die Walze 7a, 7b oder 7c mitsamt dem Abdeckplanenteil 4a, 4b oder 4c trotz des beachtlichen Gewichtes leicht von der Zugmaschine 1 weg etwa zu einem Transportfahrzeug oder einem Container bringt.

Um die Abdeckplane 4 bzw. die Solarzellenstreifen 5 zu reinigen, kann in einer die Walze 7 mit aufgerollter Abdeckplane 4 übergreifenden Abdekkung eine Reinigungseinrichtung mit Wasserstrahldüse, Bürste und dergl. vorgesehen sein. Das Wasser zum Reinigender Abdeckplane 4 kann aus Behältern gepumpt werden, die in der Gestängekonstruktion 3 und ggfs. auch im Hohlraum der Walzen 7 Platz finden. Zum Füllen dieser Behälter kann Wasser aus der Klimaanlage oder aus Wasserleitungen genommen werden. Wenn die Walzenabdeckung zugleich als "Wasserrinne" ausgebildet ist mit einem Abfluß über ein entsprechend ausgebildetes Sieb in die Wasserbehälter, kann auch Regenwasser verwendet werden. Es muß durch einen Überlauf nach außen außerhalb der Abdeckplane 4 dafür gesorgt werden, daß die Wasserbehälter lediglich bis zu einem festgelegten Höchststand gefüllt werden können.

In warmen Gegenden ist eine Klimaanlage für das Führerhaus 1a der Zugmaschine 1 wünschenswert. Diese kann an der Rückwand des Führerhauses 1a angeordnet werden, wobei sie die benötigte Energie über die Hochleistungskondensatoren (Batterien) der Solarzellenstreifen 5 erhält.

Manches Frachtgut benötigt während des Transportes eine ausreichende Kühlung. Die Größe der hierfür benötigten Kälteanlage hängt davon ab, ob das Frachtgut in entsprechend isolierten Behältern bzw. Behälteranlagen transportiert wird öder ob der gesamte Raum oberhalb der Ladefläche und unterhalb der Abdeckplane gekühlt werden muß. Damit die Kälteanlage nicht zu groß dimensioniert wird, ist auch im letzteren Fall eine Raumisolierung durch Isoliermaterial zwingend erforderlich. Danach könnte die Aufteilung des insgesamt zu kühlenden Raumes beispielsweise gemäß der erforderlichen Raumtemperatur dadurch erfolgen, daß Güter mit höheren Lagertemperaturen von Gütern mit niedrigeren Lagertemperaturen durch waagerechte und/oder senkrechte isolierende Wände getrennt sind, deren Isolation in festgelegten Abschnitten unterbrochen ist, um dem hier angeordneten Kühlrohr die Möglichkeit zur Kälteabgabe zu geben. Wenn auf diese Weise die Güter mit niedrigeren Lagertemperaturen zumindest teilweise von Gütern mit höheren Lagertemperaturen umgeben sind, kann so der insgesamt erforderliche Kältebedarf auf einem minimalen Wert gehalten werden. Selbstverständlich sind auch andere vorteilhafte Lagerverhältnisse gemäß den jeweiligen Gegebenheiten möglich, insbesondere, wenn nur ein Teil des Raumes für das Kühlgut benötigt wird, der dann durch eine entsprechend starke Isolierung besonders gut abgeschirmt werden muß. Bei Beachtung aller Isoliermöglichkeiten kann die in den Solarzellenstreifen 5 der Abdeckplane 4 gewonnene Energie zumindest weitgehend ausreichen, die Kälteanlage zu betreiben, ohne daß Energie aus der Fahrzeugbatterie oder die Hilfe eines zusätzlichen Generators benötigt wird. Die Schaltungen erfolgen zweckmäßig vom Führerhaus 1a aus.

Ergänzende Energie kann ggfs. von einem Windrad gewonnen werden, das auf dem Dach der Zugmaschine und/oder auf der Gestängekonstruktion oberhalb der Abdeckplane 4 aufgesteckt und vom Fahrtwind oder vorhandenen Windverhältnissen angetrieben wird. Dabei ist ein gesichertes Einrasten und Verrasten der Windradwelle und deren Reibschutz gegenüber der Umgebung, insbesondere durch die Abdeckplane 4 hindurch, vorzusehen.

Ergänzende Energie kann weiterhin durch eine Einrichtung zur Energierückgewinnung beim Bremsen gewonnen werden (siehe DE-OS 44 09 086) sowie durch eine Einrichtung, mit deren Hilfe in Solarzellen Energie unabhängig vom Sonnenlicht erzeugt wird (siehe US-PS 56 47 916).

Insgesamt kann die in den Solarzellenstreifen 5 gewonnene Energie neben den vorstehend angegebenen Verwendungsgebieten auch zum Aufladen der Fahrzeugbatterie und über eine Steckdose anderen Verbrauchern zugeleitet werden. Sofern eine Abdeckplane nicht aufgerollt werden muß, kann statt der Plane eine fahrzeugfeste Abdeckung vorgesehen werden, die den Vorteil hat, daß unflexible monocristalline oder polycristalline Solarzellen angebracht werden können, die ein Vielfaches der Leistung flexibler Solarzellen bringen. Dies ist von besonderer Bedeutung bei dem Einsatz größerer Kälteanlagen sowie zum Anlassen von Diesel-, Wasserstoff- und Flüssiggas-Motoren.

Sollte sich im Betrieb ein Energie-Überschuß ergeben, der von den normal vorhandenen Energiespeichern nicht mehr aufgenommen werden kann, so ist es günstig, Wasserstoff als Stromspeicher zu verwenden,da mit Elektrolyse-Wasserstoff große Mengen elektrischer Energie kostengünstig gespeichert werden können. Die Verluste bei der Energiewandlung sind verhältnismäßig gering, weil sowohl Elektrolyseure als auch Brennstoffzellen, die den Wasserstoff zurück in Strom verwandeln, mit hohen Wirkungsgraden arbeiten.

Es wird darauf hingewiesen, daß die erfindungsgemäße Zugmaschine nicht nur für den Straßenverkehr, wie dies aus der Figur 1 zu entnehmen ist, sondern natürlich auch für den - nicht dargestellten - Eisenbahnverkehr mit den selbstverständlichen konstruktiven Änderungen anwendbar ist.

Supraleitende Magnetische Energiespeicher (SMES) sind Hoffnungsträger für vielfältige Nutzungsmöglichkeiten in elektrischen Netzen. Zum Beispiel zur lokalen Verbesserung und Stabilisierung der Netzqualität, sowie für den optimalen Einsatz regenerativer Energieträger mit flukturierenden (nicht gleichmäßigen) Leistungsangebot.
z.B. Sonnenenergie, Windenergie und Bremsenergie hinterinandergeschaltet.
Supraleitende Strombegrenzer und/oder SMES kann zwischen Energiespeicher und Wasserstoffenergiespeicher
(siehe letzter Absatz S. 5 Zugmaschine) als Technik eingesetzt werden.
Supraleitendes Hochspannungskabel zum Beispiel zum transport der Bremsenergie zum Energiespeicher.
(Seite 5,Zeile 2 Zugmaschine)

## Patentansprüche

1. Zugmaschine als Fahrzeug mit Sattelauflieger und/oder Anhänger und mit einer Plane zum Abdecken der Ladefläche,
dadurch gekennzeichnet,
daß die Abdeckplane (4) mit biegsamen Solarzellenstreifen (5) auf einer Walze (7) aufrollbar angeordnet ist, die auf einer Gestängekonstruktion (3) oberhalb der Ladefläche drehbar und abnehmbar aufliegt.

2. Zugmaschine nach Anspruch 1,
dadurch gekennzeichnet,
daß die Walze (7) am Dach der Zugmaschine (1) angeordnet ist.

3. Zugmaschine nach Anspruch 1 oder 2,
dadurch gekennzeichnet,
daß die Walze (7) am Dach des Sattelaufliegers bzw. des Anhängers (2) angeordnet ist.

4. Zugmaschine nach einem der Ansprüche 1 bis 3,
dadurch gekennzeichnet,
daß die Walze (7) am bzw. im Windabweiser auf dem Dach angeordnet ist,

5. Zugmaschine nach mindestens einem der Ansprüche 1 bis 4,
dadurch gekennzeichnet,
daß die Abdeckplane (4) mehrteilig ausgebildet ist, um die Ladefläche von oben und von den Seiten abzudecken.

6. Zugmaschine nach Anspruch 5,
dadurch gekennzeichnet,
daß an jedem Abdeckplanenteil (4a, 4b, 4c) eine eigene Walze (7a,7b, 7c) für den Rollvorgang zugeordnet ist.

7. Zugmaschine nach mindestens einem der Ansprüche 1 bis 6,
dadurch gekennzeichnet,
daß die Gestängekonstruktion (3) so ausgebildet ist, daß die Plane (4) bzw. die Planenteile (4a, 4b, 4c) an ihr geführt werden.

8. Zugmaschine nach mindestens einem der Ansprüche 1 bis 7,
dadurch gekennzeichnet,
daß eine manuelle Betätigungsweise zum Verschieben der Abdeckplane (4) bzw. der Abdeckplanenteile (4a, 4b, 4c) vorgesehen ist.

9. Zugmaschine nach mindestens einem der Ansprüche 1 bis 7,
dadurch gekennzeichnet,
daß eine maschinelle Betätigungsweise zum Verschieben der Abdeckplane (4) bzw. der Abdeckplanenteile (4a, 4b, 4c) vorgesehen ist.

10. Zugmaschine nach mindestens einem der Ansprüche 6 bis 9,
dadurch gekennzeichnet,
daß die Walze (7) wenigstens eines Abdeckplanenteils (4a, 4b,4c) einrastbar und verriegelbar ist.

11. Zugmaschine nach Anspruch 10,
dadurch gekennzeichnet,
daß die Walze (7) an einem Schwenkarm abnehmbar angebracht ist.

12. Zugmaschine nach mindestens einem der Ansprüche 1 bis 11,
dadurch gekennzeichnet,
daß im Hohlraum der Walze (7) Platz für einen Antriebsmotor zum Betätigen der Walze (7) und/oder für wenigstens einen Hochleistungskondensator zum Speichern der aus den Solarzellenstreifen (5) gewonnenen Energie vorgesehen ist.

13. Zugmaschine nach mindestens einem der Ansprüche 5 bis 12,
dadurch gekennzeichnet,
daß in der Gestängekonstruktion (3) und in wenigstens einer der Walzen (7) Platz für einen Behälter mit Wasservorrat zum Reinigen der Oberfläche der Abdeckplanen (4a, 4b, 4c) vorgesehen ist.

14. Zugmaschine nach mindestens einem der Ansprüche 1 bis 13,
dadurch gekennzeichnet,
daß die Solarzellenstreifen (5) wasserdicht und lösbar miteinander verbunden sind.

15. Zugmaschine nach mindestens einem der Ansprüche 1 bis 14,
dadurch gekennzeichnet,
daß die Solarzellenstreifen (5) eine die Energieaufnahme nicht hindernde wasserabweisende Schutzschicht aufweisen, die Schmutzteilchen weniger Halt gibt und auch eine Abnutzung durch Reibeffekte zumindest verringert.

16. Zugmaschine nach mindestens einem der Ansprüche 1 bis 15,
dadurch gekennzeichnet,
daß die Gestängekonstruktion (3) eine die Walze (7) mit aufgerollter Abdeckplane (4) bzw. mit aufgerolltem Abdeckplanenteil (4a, 4b, 4c) übergreifende Abdeckung aufweist, an der eine Einrichtung zum Reinigen der Oberfläche von Abdeckplane (4) bzw. Abdeckplanenteil (4a,4b, 4c) angebracht ist.

17. Zugmaschine nach mindestens einem der Ansprüche 1 bis 16,
dadurch gekennzeichnet,
daß eine Klimaanlage an ihrer Rückwand angebracht ist, die die für ihren Betrieb erforderliche Energie wenigstens teilweise von den Solarzellenstreifen (5) erhält.

18. Zugmaschine nach mindestens einem der Ansprüche 1 bis 17,
dadurch gekennzeichnet,
daß eine Kühlanlage an ihrer Rückwand angebracht ist, die die für ihren Betrieb erforderliche Energie wenigstens teilweise von den Solarzellenstreifen (5) erhält.

19. Zugmaschine nach mindestens einem der Ansprüche 1 bis 18,
dadurch gekennzeichnet,
daß unter der Abdeckplane (4) ein Kühlraum vorgesehen ist, der durch Trennwände abgeteilte Bezirke für unterschiedliche Kühltemperaturen aufweist.

20. Zugmaschine nach Anspruch 19,
dadurch gekennzeichnet,
daß die Trennwände Isolierschichten und Kühlabschnitte aufweisen.

21. Zugmaschine nach mindestens einem der Ansprüche 1 bis 20,
dadurch gekennzeichnet,
daß auf der Gestängekonstruktion (3) wenigstens ein Windrad horizontal angebracht ist, das durch den Fahrtwind und/oder durch vorhandene Windverhältnisse angetrieben wird und so zur Energiegewinnung beiträgt.

22. Zugmaschine nach mindestens einem der Ansprüche 1 bis 21,
dadurch gekennzeichnet,
daß eine Einrichtung zur Energierückgewinnung beim Bremsen vorgesehen ist.

23. Zugmaschine nach Anspruch 22,
dadurch gekennzeichnet,
daß eine Einrichtung vorgesehen ist, um die Bremsenergie in elektrische Speicherenergie umzusetzen.

24. Zugmaschine nach mindestens einem der Ansprüche 1 bis 23,
dadurch gekennzeichnet,
daß eine Einrichtung vorgesehen ist, mit deren Hilfe in Solarzellen Energie unabhängig vom Sonnenlicht erzeugt wird.

25. Zugmaschine nach mindestens einem der Ansprüche 1 bis 24,
dadurch gekennzeichnet,
daß in ihrem Führerhaus (1a) Betätigungs-, Steuer- und Regeleinrichtungen zum Ein- und Ausfahren der Abdeckplane (4) bzw. der Abdeckplanenteile (4a, 4b, 4c), deren Reinigen sowie zum Schalten und Regeln der Klima- und Kälteanlage angeordnet sind.

26. Zugmaschine nach mindestens einem der Ansprüche 1 bis 25,
dadurch gekennzeichnet,
daß zum Speichern überschüssiger Energie Elektrolyse-Wasserstoff als Stromspeicher vorgesehen ist.
